# EUROPEAN PATENT APPLICATION

(11) **EP 4 379 125 A1**
(43) Date of publication of application: **05.06.2024**
(21) Application number: 22849316.9
(22) Date of filing: 19.07.2022
(51) Int. Cl.: D06F 75/14, D06F 75/38

(54) **STEAM GENERATING BODY, STEAM GENERATOR, AND METHOD FOR MANUFACTURING STEAM GENERATING BODY**

(30) Priority: 30.07.2021 JP 2021125224
(71) Applicant: Panasonic Intellectual Property Management Co., Ltd., Kadoma-shi, Osaka 571-0057 (JP)
(72) Inventor: MURATA, Atsushi, 571-0057 Osaka (JP)
(74) Representative: Appelt, Christian W.
(86) International application number: PCT/JP2022/028043
(87) International publication number: WO 2023/008253

(57) **Abstract**

A vapor generator (base portion (110)) includes a marked surface (inner bottom surface (112)) included in a portion of a surface of the vapor generator. A minimum temperature of the inner bottom surface (112) at which a Leidenfrost phenomenon occurs is at least 5 degrees Celsius higher than a minimum temperature at which the Leidenfrost phenomenon occurs in an area other than the inner bottom surface (112). The inner bottom surface (112) includes a recessed and protruded structure (30) in which a plurality of recesses (31) and a plurality of protrusions (32) are alternately disposed in a predetermined direction in a planar arrangement at a predetermined interval, and a groove (114) having a width (W) that is greater than the predetermined interval (p). The recessed and protruded structure (30) is provided inside the groove (114).

## Description

### [Technical Field]

The present invention relates to a vapor generator, a vapor generation device, and a method for manufacturing the vapor generator.

### [Background Art]

In a vapor generation device, such as an iron, water is supplied to the inside of a vapor chamber, and vapor is generated by heating the water inside of the vapor chamber. However, since the vapor generated in the vapor chamber is interposed between an inner surface of the vapor chamber and the water, and forms an insulating layer, evaporation of the water may be delayed (Leidenfrost phenomenon). To prevent this delay in evaporation caused by the Leidenfrost phenomenon, a vapor generation device is known in which a coating layer that improves evaporation performance is applied to a surface on the inside of a vapor chamber (see Patent Literature (PTL) 1, for example).

### [Citation List]

### [Patent Literature]

[PTL 1] Japanese Patent No. 5666302

### [Summary of Invention]

### [Technical Problem]

In this case, when a coating layer is used to improve evaporation performance, the coating layer may peel off, thereby preventing the intended performance from being achieved. Furthermore, coating processes during manufacturing may also have an adverse effect on the human body. Moreover, during coating processes, the coating layer may be applied unevenly, thereby preventing uniform evaporation performance from being achieved.

In view of this, the present invention has an object to provide a vapor generator and the like that can inhibit degradation of evaporation performance even when a coating layer is not provided.

### [Solution to Problem]

In order to achieve the above-mentioned object, a vapor generator according to one aspect of the present invention includes: a marked surface included in a portion of a surface of the vapor generator, wherein a minimum temperature of the marked surface at which a Leidenfrost phenomenon occurs is at least 5 degrees Celsius higher than a minimum temperature at which the Leidenfrost phenomenon occurs in an area other than the marked surface, the marked surface includes: a recessed and protruded structure in which a plurality of recesses and a plurality of protrusions are alternately disposed in a predetermined direction in a planar arrangement at a predetermined interval; and a groove having a width that is greater than the predetermined interval, and the recessed and protruded structure is provided inside the groove.

A vapor generation device according to one aspect of the present invention includes: a vapor chamber included in the above-mentioned vapor generator.

A method for manufacturing a vapor generator according to one aspect of the present invention includes: forming a marked surface in a portion of a surface of a base material, the forming of the marked surface including: forming at least one groove in the portion of the surface of the base material; and forming a recessed and protruded structure inside the at least one groove by laser processing, the recessed and protruded structure including a plurality of recesses and a plurality of protrusions that are alternately disposed in a predetermined direction in a planar arrangement at an interval that is less than a width of the at least one groove, wherein a minimum temperature of the marked surface at which a Leidenfrost phenomenon occurs is at least 5 degrees Celsius higher than a minimum temperature at which the Leidenfrost phenomenon occurs in an area other than the marked surface.

### [Advantageous Effects of Invention]

The present invention can provide a vapor generator and the like that can inhibit degradation of evaporation performance even when a coating layer is not provided.

### [Brief Description of Drawings]

[FIG. 1]

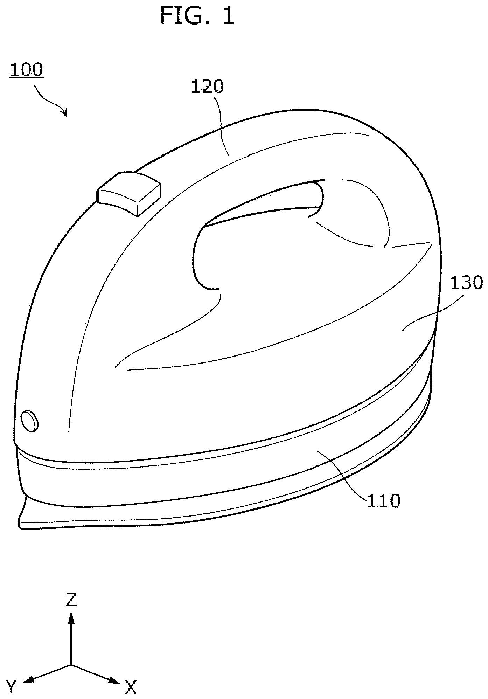

   FIG. 1 is a perspective view of an iron, which is a vapor generator according to Embodiment 1.
[FIG. 2]

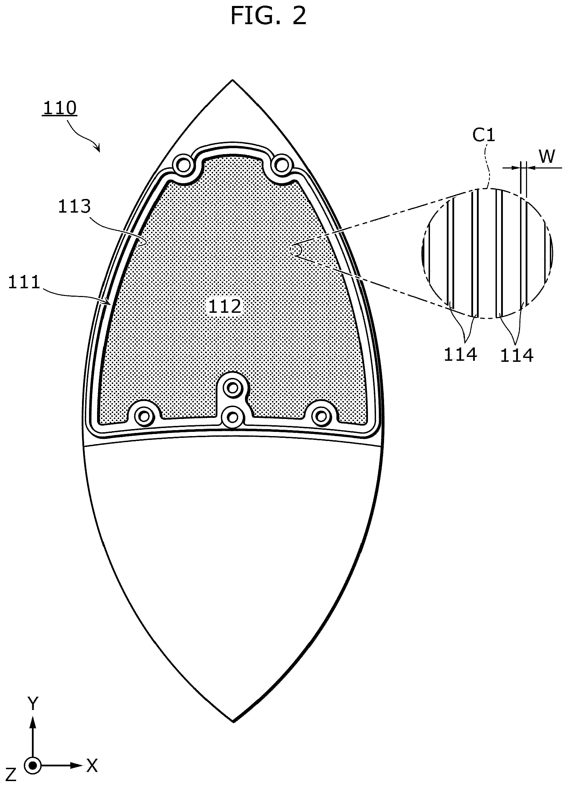

   FIG. 2 is a top view of a base portion according to Embodiment 1.
[FIG. 3]

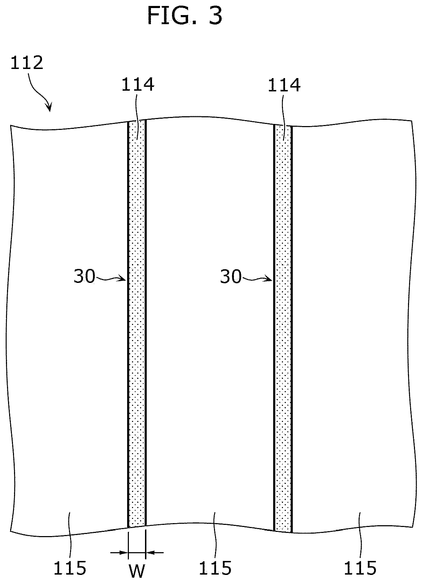

   FIG. 3 is a plan view of a plurality of grooves of an inner bottom surface according to Embodiment 1.
[FIG. 4]

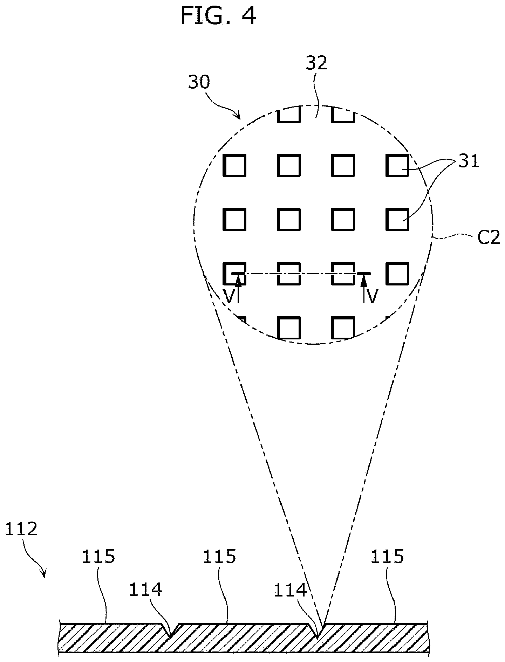

   FIG. 4 is a cross-sectional view of the plurality of grooves of the inner bottom surface according to Embodiment 1.
[FIG. 5]

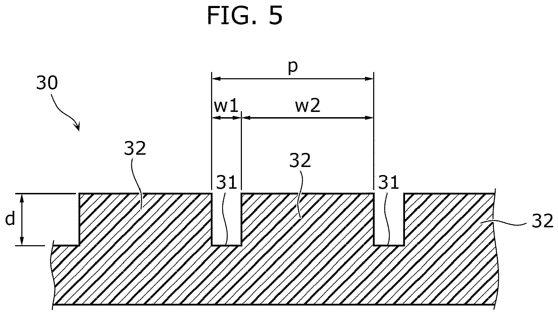

   FIG. 5 is an enlarged cross-sectional view of a plurality of recesses and a plurality of protrusions according to Embodiment 1.
[FIG. 6]

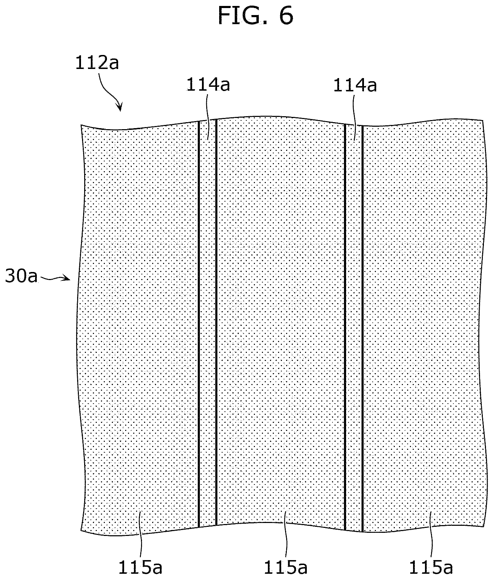

   FIG. 6 is a plan view of an inner bottom surface according to Embodiment 2.
[FIG. 7]

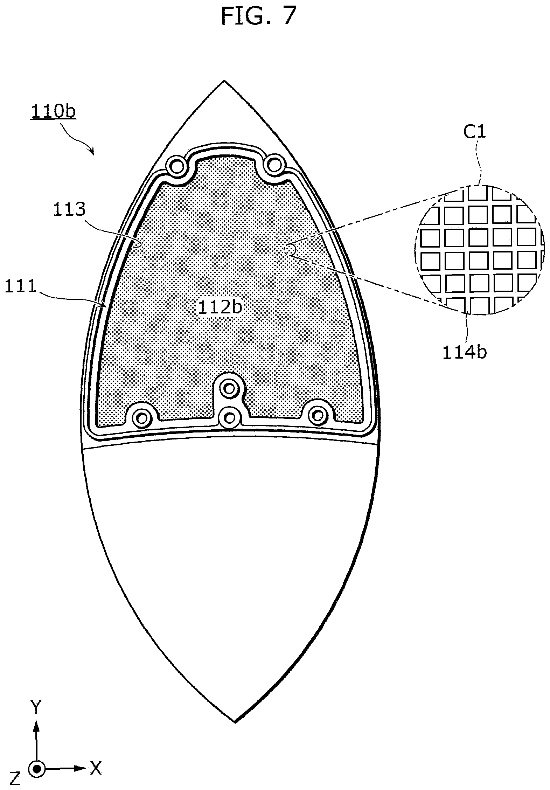

   FIG. 7 is a top view of a base portion according to Embodiment 3.

### [Description of Embodiments]

Hereinafter, vapor generators and the like according to embodiments of the present invention will be described in detail with reference to the drawings. It should be noted that the embodiments described below each illustrate a specific example of the present invention. Accordingly, the numerical values, shapes, materials, elements, arrangement and connection states of the elements, processes, order of the processes, etc., described in the following embodiments are mere examples, and are therefore not intended to limit the present invention. Accordingly, among elements in the following embodiments, those not appearing in any of the independent claims will be described as optional elements.

It should be noted that the respective figures are schematic diagrams and are not necessarily precise illustrations. Therefore, for example, the scaling, and so on, depicted in the drawings is not necessarily uniform. Moreover, elements that are substantially the same are given the same reference signs in the respective figures, and redundant descriptions may be omitted or simplified.

Furthermore, in the present specification, terms indicating relationships between elements, such as "parallel", "orthogonal", or the like, terms indicating shapes of elements such as "square", "rectangular", or the like, and numerical ranges refer not only to their strict meanings, but also include variations that fall within an essentially equivalent range, such as a range of deviation of a few percent.

### [Embodiment 1]

### [Vapor Generation Device]

First, a vapor generation device according to Embodiment 1 will be described with reference to FIG. 1 and FIG. 2. FIG. 1 is a perspective view of clothing iron 100, which is a vapor generator according to Embodiment 1. As illustrated in FIG. 1, iron 100 includes base portion 110 in which is embedded a heater not illustrated in the figures, grip portion 120 that is grasped by a user, and tank portion 130 that is disposed between grip portion 120 and base portion 110 and stores water.

The outer bottom surface of base portion 110 is a pressing surface that presses and spreads out clothing and the like, and includes a plurality of spray outlets (not illustrated in the figures) from which vapor is sprayed. Base portion 110 is formed from a metal having relatively high thermal conductivity (e.g., aluminum).

FIG. 2 is a top view of base portion 110 according to Embodiment 1. As illustrated in FIG. 2, vapor chamber 111 that is recessed in shape is provided in the top surface of base portion 110, from a central portion in the Y-axis direction up to a leading end portion on the positive side of the Y-axis direction. Vapor chamber 111 communicates with each spray outlet, and water is supplied to vapor chamber 111 from tank portion 130. When water is supplied to vapor chamber 111, the water is heated by heat received from the heater inside of vapor chamber 111, thereby generating vapor. This vapor is sprayed out from the plurality of spray outlets. In this manner, base portion 110 is one example of a vapor generator that generates vapor.

Vapor chamber 111 includes inner bottom surface 112 and inner side surface 113 that surrounds inner bottom surface 112. The water supplied to vapor chamber 111 evaporates due to the heat of the heater received from inner bottom surface 112 and inner side surface 113. Accordingly, inner bottom surface 112 and inner side surface 113 are heated surfaces that heat water. A plurality of grooves 114 are formed in the entire surface of inner bottom surface 112 by post-processing performed during manufacturing. Due to this post-processing, inner bottom surface 112 is visibly different from other areas of base portion 110, thereby making it easier to check whether post-processing has been performed during a visual inspection process. For this reason, inner bottom surface 112 can also be referred to as a marked surface that is visibly different from other areas of base portion 110. There is no coating layer or the like layered in inner bottom surface 112, and the base material of base portion 110 is exposed throughout.

### [Marked Surface]

Next, the marked surface will be described in detail. Here, inner bottom surface 112 will be described as an example of a marked surface. In FIG. 2, an enlarged portion of inner bottom surface 112 is illustrated in circle C1. As illustrated in circle C1, in inner bottom surface 112, the plurality of grooves 114 that extend in the Y-axis direction are arranged side by side in the X-axis direction. That is to say, the plurality of grooves 114 are formed in a striped pattern. Each of the plurality of grooves 114 has a width W that is on the order of a millimeter or less. Width W is uniform among the grooves.

FIG. 3 is a plan view of the plurality of grooves 114 of inner bottom surface 112 according to Embodiment 1. FIG. 4 is a cross-sectional view of the plurality of grooves 114 of inner bottom surface 112 according to Embodiment 1.

Each groove 114 is a groove notched in a V-shape in a cross-sectional view. In inner bottom surface 112, areas disposed outside of each groove 114 are outside areas 115. Each outside area 115 is a flat surface. Fine recessed and protruded structures 30 are formed in the inner surfaces of each groove 114. In FIG. 3, recessed and protruded structures 30 are represented by dotted hatching. In FIG. 4, an enlarged portion of the inner surface of groove 114 is illustrated in circle C2.

Recessed and protruded structures 30 include a plurality of recesses 31 arranged in a matrix in a plan view. Recesses 31 are approximately square in the plan view. Protrusions 32 are the portions between each of a plurality of recesses 31 in a predetermined direction. Although it can be said that there is a single protrusion 32 since protrusion 32 is a continuous lattice pattern when viewed as a whole, when viewed only along a predetermined direction, it can be said that protrusion 32 is divided by respective recesses 31 into a plurality of protrusions 32. That is to say, a plurality of recesses 31 and a plurality of protrusions 32 are alternately arranged at a predetermined interval in both the lengthwise direction and the crosswise direction.

FIG. 5 is an enlarged cross-sectional view of the plurality of recesses 31 and the plurality of protrusions 32 according to Embodiment 1. Specifically, FIG. 5 is a cross-sectional view illustrating the cross section taken along line V-V in FIG. 4.

As illustrated in FIG. 5, the plurality of recesses 31 and the plurality of protrusions 32 are disposed in a planar arrangement at a predetermined interval. The total, in the predetermined direction, of width w2 of protrusion 32 and width w1 of recess 31 is the predetermined interval (p = w1 + w2). By setting predetermined interval p, width w1, and width w2 such that they satisfy a given relationship, it is possible to make the surfaces that include recessed and protruded structures 30 (inner surfaces of each groove 114) hydrophilic surfaces. Specifically, the water contact angle relative the inner surfaces of each groove 114 can be set to be no more than 60°.

For example, by setting width w2 / width w1 ≥ 0.5, and setting predetermined interval p to at least 1 µm and at most 1,000 µm, the water contact angle relative the inner surfaces of each groove 114 can be set to be no more than 60°. Predetermined interval p is smaller than width W of each groove 114. Furthermore, if the relationship between depth d of recess 31 and width w2 is depth d / width w2 ≤ 1, the strength of protrusions 32 can be increased, thereby making it possible to prevent protrusions 32 from being damaged. Accordingly, since inner bottom surface 112 of vapor chamber 111 includes a hydrophilic surface, water can be made to more easily wet and spread out over inner bottom surface 112, thereby promoting evaporation to occur inside of vapor chamber 111.

Here, since inner bottom surface 112 of vapor chamber 111 instantaneously reaches a high temperature when heated, there is a high probability that the Leidenfrost phenomenon will occur. Specifically, if inner bottom surface 112 causes water to instantaneously reach a high temperature, evaporated gas forms between the water and inner bottom surface 112. This evaporated gas inhibits further evaporation of the water. In the present embodiment, the plurality of grooves 114 and the recessed and protruded structures 30 inside of each groove 114 can allow the evaporated gas to escape from underneath the water. Accordingly, the minimum temperature at which the Leidenfrost phenomenon occurs in inner bottom surface 112 is at least 5°C higher than other areas (e.g., areas other than vapor chamber 111 in base portion 110). In other words, since the Leidenfrost phenomenon occurs less readily, the degradation of evaporation performance of base portion 110 can be inhibited. Note that by adjusting the number, layout, or the like of the plurality of grooves 114 or recessed and protruded structures 30 provided, the minimum temperature at which the Leidenfrost phenomenon occurs can be set to be at least 10°C higher. In this case, the Leidenfrost phenomenon occurs even less readily, and thus the degradation of evaporation performance of base portion 110 can be more reliably inhibited.

### [Vapor Generator Manufacturing Method]

Next, a method for manufacturing base portion 110 that is a vapor generator will be described.

First, a base material that constitutes base portion 110 is formed by die casting. The base material may be formed by forming methods other than die casting. Other forming methods include casting, forging, cutting, pressing, metal 3D printing methods, and the like. Furthermore, the base material may be formed from any material that can be laser processed. Materials that can be laser processed include, for example, metals, such as aluminum, aluminum alloys, iron, iron alloys, and the like, and ceramics, and the like.

Since vapor chamber 111 is already formed in the base material formed, post-processing is then performed on inner bottom surface 112 of vapor chamber 111. Specifically, a plurality of grooves 114 are formed by laser processing performed on inner bottom surface 112. At this time, the laser emitting device that emits the laser irradiates inner bottom surface 112 of vapor chamber 111 with a short-pulse laser. The pulse width of the short-pulse laser is preferably no more than a nanosecond. By setting the output of the laser to at least a predetermined value, the fine recessed and protruded structures 30 can be formed at the same time that grooves 114 are formed. In this case, grooves 114 attain a V-shape in a cross-sectional view.

Here, since fine recessed and protruded structures 30 are formed inside of the plurality of grooves 114 by irradiation with the laser, grooves 114 have a light absorption rate higher than areas other than grooves 114. This is believed to be caused by the various factors described below. For example, 1) irradiation with the laser causes the surface of the base material to become carbonized and take on a darker color. 2) Irradiation with the laser causes the molecular density of the surface of the base material to increase, and the surface to become condensed and take on a darker color. 3) Irradiation with the laser causes an impurity level of a metal oxide to be formed in the surface of the base material, and the surface to take on a darker color. Although it is currently unclear which of these factors is highly plausible, the inner surfaces of each groove 114 take on a darker color and have a light absorption rate that is higher than other areas as a result of laser processing. Consequently, inner bottom surface 112 of vapor chamber 111 becomes a marked surface. In this manner, base portion 110 is manufactured by performing post-processing on the base material. It should be noted that, by analyzing inner bottom surface 112 of vapor chamber 111, it is possible to identify whether inner bottom surface 112 was formed by laser processing.

### [Advantageous Effects, etc.]

As described above, (1) a vapor generator (base portion 110) according to the present embodiment includes a marked surface (inner bottom surface 112) provided in a portion of a surface of the vapor generator. The minimum temperature of inner bottom surface 112 at which the Leidenfrost phenomenon occurs is at least 5°C higher than the minimum temperature at which the Leidenfrost phenomenon occurs in areas other than inner bottom surface 112. In inner bottom surface 112, recessed and protruded structures 30 in which a plurality of recesses 31 and a plurality of protrusions 32 are alternately disposed in a predetermined direction in a planar arrangement at a predetermined interval, and grooves 114 having a width W that is greater than the predetermined interval p are formed. Recessed and protruded structures 30 are formed inside grooves 114.

Furthermore, a vapor generation device (iron 100) according to the present embodiment includes vapor chamber 111 that is formed in the above-mentioned base portion 110.

Additionally, in a method for manufacturing a vapor generator according to the present embodiment, the forming of a marked surface (inner bottom surface 112) in a portion of a surface of a base material includes forming at least one groove 114 in the portion of the surface of the base material, and forming recessed and protruded structures 30 inside groove 114 by laser processing. The recessed and protruded structures 30 include a plurality of recesses 31 and a plurality of protrusions 32 that are alternately disposed in a predetermined direction in a planar arrangement at an interval p that is less than a width W of groove 114. The minimum temperature of inner bottom surface 112 at which the Leidenfrost phenomenon occurs is at least 5°C higher than the minimum temperature at which the Leidenfrost phenomenon occurs in areas other than inner bottom surface 112.

Accordingly, since the minimum temperature of inner bottom surface 112 of base portion 110 at which the Leidenfrost phenomenon occurs is at least 5°C higher than areas other than inner bottom surface 112, the degradation of evaporation performance can be inhibited. This effect can be attributed to each groove 114 and recessed and protruded structures 30 formed inside of grooves 114, and each groove 114 and recessed and protruded structures 30 are formed by being directly engraved in inner bottom surface 112. In other words, the degradation of evaporation performance can be inhibited even when a coating layer is not provided in inner bottom surface 112. In this manner, according to the present embodiment, the degradation of evaporation performance can be inhibited even when a coating layer is not provided.

(2) In the vapor generator according to (1), recessed and protruded structures 30 have a light absorption rate that is higher than the light absorption rate of areas other than inner bottom surface 112.

Accordingly, due to recessed and protruded structures 30, inner bottom surface 112 is visibly different from areas other than inner bottom surface 112. For this reason, it is thereby easier to check whether post-processing to form recessed and protruded structures 30 has been performed during a visual inspection process.

(3) In the vapor generator according to (1) or (2), recessed and protruded structures 30 are hydrophilic surfaces having a water contact angle of 60 degrees or less.

Accordingly, since recessed and protruded structures 30 are hydrophilic surfaces, water can be made to more easily wet and spread out over inner bottom surface 112. As a result, evaporation can be promoted to occur inside of vapor chamber 111.

(4) In the vapor generator according to (1) to (3), base portion 110 consists essentially of metal.

Accordingly, since base portion 110 is made of metal, the hardness of base portion 110 can be enhanced. Consequently, grooves 114 and recessed and protruded structures 30 become less likely to wear, thus allowing for stable evaporation performance in the long term.

(5) In the vapor generator according to any one of (1) to (4), grooves 114 are formed by laser processing.

Accordingly, since grooves 114 are formed by laser processing, grooves 114 can be formed without using organic materials or the like that are more prone to impacting the environment.

(6) In the vapor generator according to any one of (1) to (5), recessed and protruded structures 30 are formed by laser processing.

Accordingly, since recessed and protruded structures 30 are formed by laser processing, recessed and protruded structures 30 can be formed without using organic materials or the like that are more prone to impacting the environment.

Since grooves 114 are of a V-shape in a cross-sectional view and recessed and protruded structures 30 are formed in the inner surfaces of grooves 114, it is possible to form grooves 114 and recessed and protruded structures 30 all at once by laser processing. Accordingly, manufacturing efficiency can be increased.

### [Implementation Example]

Next, an implementation example according to Embodiment 1 will be described. In the implementation example, two tabular components made of aluminum alloy were used as test pieces. Laser processing was performed on a surface of a first test piece to form a plurality of grooves 114. In other words, the surface of the first test piece was a marked surface. In the laser processing, the first test piece was irradiated with a 0.43 W pulse laser with a pulse width of 12 ps. Here, a single groove 114 in the marked surface had a width W of 30 µm and a depth of 0.8 µm.

Laser processing was not performed on a surface of a second test piece. In other words, the surface of the second test piece was a flat and unprocessed surface.

Water contact angle measurement and atomization testing were performed on these test pieces. In water contact angle measurement, an automatic contact angle meter (DW-501 made by Kyowa Interface Science Co., Ltd.) was used. A 2 µl droplet of deionized water was formed in the marked surface of the first test piece and the unprocessed surface of the second test piece, and water contact angles were measured using the above-mentioned device based on the sessile drop technique (dynamic contact angle measurement) at 100 ms, 300 ms, and 500 ms after formation of the droplet. This was conducted five times for each test piece. The θ/2 method was used as the analysis method. The measurement result was as follows.

In the unprocessed surface, the water contact angle after 100 ms was 88.6° ±0.3°, the water contact angle after 300 ms was 88.4° ±1.4°, and the water contact angle after 500 ms was 88.2° ±0.5°. In contrast, in the marked surface, the water contact angle after 100 ms was 14.9° ±0.3°, the water contact angle after 300 ms was 3.3° ±1.4°, and the water contact angle after 500 ms was less than 1° (could not be measured). As a whole, it could be seen that, in the marked surface, the water contact angle for each of the elapsed times was no more than 60 degrees.

In atomization testing, both the first test piece and the second test piece were heated to 230°C, a 0.2 ml water droplet was dropped on the marked surface of the first test piece and the unprocessed surface of the second test piece, and a visual check was performed. While the occurrence of the Leidenfrost phenomenon was observed in the unprocessed surface, the occurrence of the Leidenfrost phenomenon was not observed in the marked surface. In the marked surface, it is presumed that the temperature at which the Leidenfrost phenomenon occurs is at least 30°C higher than that in the unprocessed surface.

### [Embodiment 2]

In Embodiment 1 an example is given where recessed and protruded structures 30 are only formed inside of each groove 114 in inner bottom surface 112. In Embodiment 2, recessed and protruded structures may also be formed in outside areas. Specifically, this describes (7) a vapor generator according to any one of (1) to (6), in which recessed and protruded structures are also formed outside of grooves 114 in the marked surface. FIG. 6 is a plan view of inner bottom surface 112a according to Embodiment 2. Specifically, FIG. 6 is a diagram that corresponds to FIG. 3. As illustrated in FIG. 6, recessed and protruded structures 30a (represented by dotted hatching in FIG. 6) have been formed in each groove 114a and each outside area 115a in inner bottom surface 112a.

Accordingly, since recessed and protruded structures 30a are also formed in each outside area 115a, the minimum temperature at which the Leidenfrost phenomenon occurs in each outside area 115a can be made to be higher than areas other than inner bottom surface 112a. Consequently, since the degradation of evaporation performance of each outside area 115a can be inhibited, the degradation of evaporation performance of the base portion as a whole can be further inhibited.

### [Embodiment 3]

In Embodiment 1, an example is given where a plurality of grooves 114 are formed in a striped pattern. However, the plurality of grooves may be of any layout. FIG. 7 is a top view of base portion 110b according to Embodiment 3. Specifically, FIG. 7 is a diagram that corresponds to FIG. 2. As illustrated in FIG. 7, a plurality of grooves 114b may be arranged in a lattice pattern in inner bottom surface 112b according to Embodiment 3.

### [Other Embodiments]

Although the vapor generator and the like according to the present invention have been described based on the above embodiments, the present invention is not limited to the above embodiments.

In the above embodiments, an example is given where recessed and protruded structures 30 include a plurality of recesses 31 arranged in a matrix. However, recessed and protruded structures may include a plurality of recesses arranged in a striped pattern. Furthermore, as long as recesses and protrusions are alternately arranged at a predetermined interval, recesses and protrusions may be of any shape in a plan view.

In the above embodiments, an example is given where recessed and protruded structures 30 are formed at the same time that grooves 114 are formed by laser processing. However, grooves and recessed and protruded structures may be formed separately. For example, after laser processing is performed on a base material at an output level at which only grooves can be formed, laser processing may then be performed on the base material at an output level at which only recessed and protruded structures can be formed. Furthermore, recessed and protruded structures may also be formed by laser processing after grooves are formed in the base material by cutting, pressing, die casting, or the like.

In the above embodiments, although an example is given where grooves 114 are of a V-shape in a cross-sectional view, the cross-sectional shape of the grooves may be of any shape. For example, the grooves may be rectangular, trapezoidal, or the like in a cross-sectional view.

In the above embodiments, an example is given where inner bottom surface 112 of vapor chamber 111 is a marked surface. However, any location can be a marked surface as long as the surface is a heated surface of a vapor chamber. Specifically, an inner side surface of a vapor chamber may also be a marked surface. That is to say, grooves and recessed and protruded structures may be formed in the inner side surface of the vapor chamber. In this case, the minimum temperature at which the Leidenfrost phenomenon occurs in the inner side surface of the vapor chamber can be set to be at least 5°C higher than areas other than the inner side surface, thereby inhibiting the degradation of evaporation performance.

In the above embodiments, clothing iron 100 is given as an example of a vapor generation device. However, a vapor generation device may be any device as long as the device can generate vapor by evaporating water. Other vapor generation devices include, for example, hair irons, humidifiers, and the like.

Forms obtained through various modifications to the foregoing embodiments that can be conceived by those skilled in the art, as well as forms realized by combining elements and functions in the foregoing embodiments without departing from the essence of the present invention are included within the scope of the present invention.

### [Reference Signs List]

30, 30a recessed and protruded structure
31 recess
32 protrusion
100 iron (vapor generation device)
110, 110b base portion (vapor generator)
111 vapor chamber
112, 112a, 112b inner bottom surface (marked surface)
114, 114a, 114b groove
115, 115a outside area (outside of groove)
p interval
W, w1, w2 width

## Claims

1. A vapor generator comprising:
a marked surface included in a portion of a surface of the vapor generator, wherein
a minimum temperature of the marked surface at which a Leidenfrost phenomenon occurs is at least 5 degrees Celsius higher than a minimum temperature at which the Leidenfrost phenomenon occurs in an area other than the marked surface,
the marked surface includes:
a recessed and protruded structure in which a plurality of recesses and a plurality of protrusions are alternately disposed in a predetermined direction in a planar arrangement at a predetermined interval; and
a groove having a width that is greater than the predetermined interval, and
the recessed and protruded structure is provided inside the groove.

2. The vapor generator according to claim 1, wherein
the recessed and protruded structure has a light absorption rate that is higher than a light absorption rate of the area other than the marked surface.

3. The vapor generator according to claim 1 or 2, wherein
the recessed and protruded structure is a hydrophilic surface having a water contact angle of at most 60 degrees.

4. The vapor generator according to claim 1 or 2, wherein
the vapor generator consists essentially of metal.

5. The vapor generator according to claim 1 or 2, wherein
the groove is provided by laser processing.

6. The vapor generator according to claim 1 or 2, wherein
the recessed and protruded structure is provided by laser processing.

7. The vapor generator according to claim 1 or 2, wherein
in the marked surface, the recessed and protruded structure is provided in an area outside the groove.

8. A vapor generation device comprising:
a vapor chamber included in the vapor generator according to claim 1 or 2.

9. A method for manufacturing a vapor generator, the method comprising:
forming a marked surface in a portion of a surface of a base material, the forming of the marked surface including:
forming at least one groove in the portion of the surface of the base material; and
forming a recessed and protruded structure inside the at least one groove by laser processing, the recessed and protruded structure including a plurality of recesses and a plurality of protrusions that are alternately disposed in a predetermined direction in a planar arrangement at an interval that is less than a width of the at least one groove, wherein
a minimum temperature of the marked surface at which a Leidenfrost phenomenon occurs is at least 5 degrees Celsius higher than a minimum temperature at which the Leidenfrost phenomenon occurs in an area other than the marked surface.
